# FASCICULE DE BREVET EUROPEEN

(11) **EP 3 397 393 B1**
(45) Date de publication et mention de la délivrance du brevet: **12.06.2019**
(21) Numéro de dépôt: 16822488.9
(22) Date de dépôt: 31.12.2016
(51) Int. Cl.: B05B 7/22, B22F 3/105, B29C 64/393, B33Y 50/02

(54) **PROCÉDÉ ET SYSTÈME POUR LE RÉGLAGE D'UN DISPOSITIF DE FABRICATION ADDITIVE**
VERFAHREN SOWIE VORRICHTUNG ZUR EINSTELLUNG EINER VORRICHTUNG FÜR ADDITIVE FERTIGUNG
METHOD AND SYSTEM FOR ADJUSTING AN APPARATUS FOR ADDITIVE MANUFACTURING

(30) Priorité: 31.12.2015 FR 1502754
(43) Date de publication de la demande: 07.11.2018
(73) Titulaire: Ecole Centrale De Nantes, 44300 Nantes (FR)
(72) Inventeur: HASCOET, Jean-Yves, 44300 Nantes (FR); CARABIN, Gilles, 49230 Germain St Moine (FR)
(74) Mandataire: Ipside
(86) Numéro de dépôt international: PCT/EP2016/082951
(87) Numéro de publication internationale: WO 2017/114965

(56) Documents cités:
- DE-A1-102005 058 172
- DE-A1-102007 032 190
- US-A- 5 396 333

## Description

L'invention concerne un procédé et un système pour le réglage d'un dispositif de fabrication additive. L'invention est plus particulièrement adaptée à un procédé de fabrication additive dit CLAD®, acronyme de « Construction Laser Additive Directe », consistant à construire un objet par le dépôt d'un matériau pulvérulent mis en fusion par un laser.

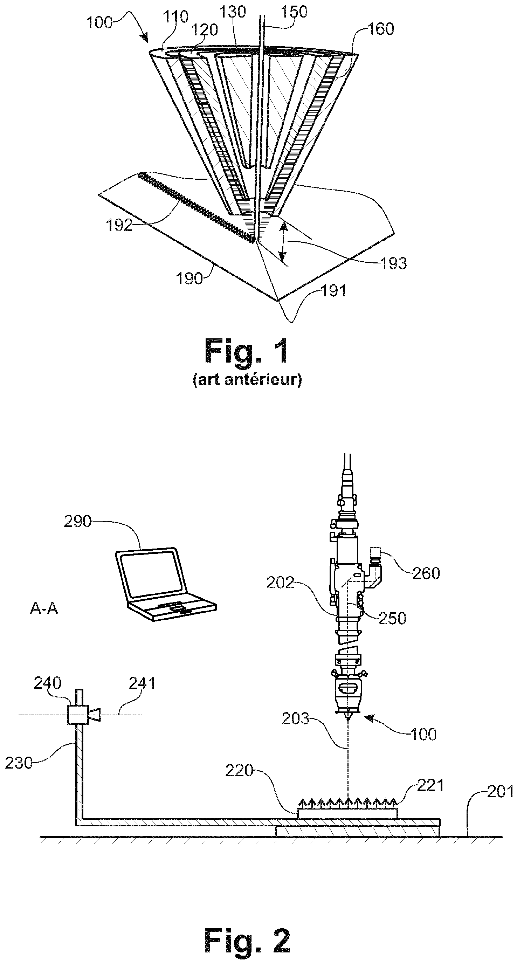

La figure 1, relative à l'art antérieur, montre schématiquement un exemple de réalisation de ce procédé. Selon cet exemple de réalisation, le dépôt de matière est réalisé par l'intermédiaire d'une buse (100) de projection / fusion de la poudre comprenant 3 cônes concentriques délimitant entre leurs parois des espaces annulaires coniques également concentriques. Un laser (150) transverse le cône intérieur (130) par un alésage centré sur l'axe dudit cône. Le laser est focalisé sur le point (191) où le dépôt (192) de matière est réalisé sur l'objet (190) en cours de fabrication. De la poudre (160) est projetée dans l'espace annulaire conique compris entre la surface intérieure du cône (110) extérieur et la surface extérieure d'un cône (120) intermédiaire, alors qu'un gaz est soufflé dans l'espace annulaire conique compris entre la surface intérieure dudit cône (120) intermédiaire et la surface extérieure du cône (130) intérieur. Le centrage des cônes (110, 120, 130) les uns par rapport aux autres et le réglage des paramètres font que la poudre est projetée selon un jet conique creux dont le sommet est, dans l'idéal, confondu avec le point de focalisation (191) du laser (150). La distance (193) entre la point (191) de dépôt de la matière et l'extrémité avant du cône (110) extérieur est couramment de l'ordre de 5 mm, sans que cette valeur ne puisse être considérée comme limitative ni exhaustive.

La mise en oeuvre d'un tel procédé nécessite de connaître précisément la forme du cône de matière projetée et d'assurer le centrage parfait dudit cône par rapport au faisceau laser. Plus particulièrement dans le cadre de la fabrication d'un objet nécessitant la mise en oeuvre de trajectoires complexes comprenant, par exemple, des variations continues de l'orientation du jet de poudre dans l'espace, nécessitent une connaissance parfaite de la longueur dudit cône, de la position de son centre voire de la forme de ce cône. Ces paramètres sont notamment gérés dans une machine à commande numériques par l'intermédiaire de paramètres dits correcteurs ou jauges d'outil, qui permettent de piloter les axes de manière appropriée, de sorte à respecter un programme qui défini les mouvements par le déplacement du point de dépôt et l'orientation de la projection en regard de la surface réalisée. À cette fin il est nécessaire de connaître la position relative de ce point de dépôt et de focalisation du laser dans le repère de la machine. Ces techniques de programmation et de pilotage, identiques à celles utilisées dans le cadre de la fabrication par enlèvement de matière, sont connues de l'art antérieur et ne sont pas détaillées plus avant. Dans le domaine de l'enlèvement de matière, les paramètres de jauge d'outil sont déduits directement de la mesure de l'outil physique, soit hors machine, soit sur la machine.

Dans le cas de la fabrication additive, plus particulièrement dans le cadre du procédé CLAD, les dimensions du cône de projection sont données par les paramètres de mise en oeuvre du procédé, tels que le débit de gaz et la nature de la poudre projetée, ou encore, par le réglage des cônes de la buse. Aussi, il n'est pas possible mesurer un paramètre de jauge outil, tel que la position de l'axe du cône de projection dans le repère machine et la longueur du cône de projection, ou de régler la forme dudit cône de projection sans mettre en oeuvre le procédé de projection.

Selon une méthode de l'art antérieur, la position de l'axe du laser est obtenue en effectuant un tir à faible énergie sur un ruban adhésif collé sur l'extrémité de la buse. L'extrémité de la buse laisse une trace sur la partie collante et le tir laser fait un trou dans le ruban. Ce mode opératoire permet de régler la concentricité des deux marques : le trou et la trace de la buse, en agissant sur les réglages appropriés des cônes de la buse. Il s'agit dans tous les cas d'une mesure indirecte qui doit être renouvelée à plusieurs reprises pour réaliser le réglage. La qualité du réglage est aléatoire, et même un opérateur expérimenté ne peut espérer une erreur de répétabilité inférieure à 0,5 mm. Dans tous les cas, cette technique de l'art antérieur ne permet pas de déterminer la jauge d'outil, c'est-à-dire la longueur et, au besoin, la forme du cône de projection.

Le document US 5 396 333 décrit un système pour le réglage et la mesure d'un dispositif de fabrication additive comprenant une buse de projection de matière et un faisceau laser traversant le centre de ladite buse, ledit faisceau laser ayant pour rôle d'illuminer la section du jet de matière projetée.

L'invention vise à résoudre les inconvénients de l'art antérieur et concerne à cette fin un système pour le réglage et la mesure d'un dispositif de fabrication additive, notamment par le procédé CLAD, comprenant une buse de projection de poudre et un faisceau laser traversant le centre de ladite buse, lequel dispositif comportant **:**
a. une source lumineuse comprenant:
   ai. un moyen de positionnement de ladite source lumineuse par rapport à une surface matérielle ;
   aii. un moyen d'éclairage apte à délivrer un flux lumineux sensiblement perpendiculaire à un plan, dit plan d'éclairage
b. un appareil de prise de vue, dit caméra de profil, installé de sorte que son axe optique soit sensiblement parallèle au plan d'éclairage ;
c. un dispositif de cheminement optique apte à projeter la vision par le centre de la buse de projection ;
d. un deuxième appareil de prise de vue, dit caméra de centrage, dont l'axe optique est placé sur le cheminement optique ;
e. une cible apte à être marquée par un tir laser à faible puissance ;
f. un ensemble d'acquisition et de traitement apte à collecter les images issues des appareils de prise de vue.

Ainsi, le système objet de l'invention d'obtenir des images du jet de poudre et du faisceau laser et de matérialiser la position de l'orifice de projection de poudre par le flux lumineux traversant la buse et le centrage du laser par le marquage de la cible. Le dispositif permet de contrôler le centrage de la buse et du laser en temps réel sans avoir à effectuer de nouveau tir ou à ré-installer le dispositif.

L'invention est avantageusement mise en oeuvre selon les modes de réalisation et les variantes exposés ci-après, lesquels sont à considérer individuellement ou selon toute combinaison techniquement opérante.

Avantageusement, la source lumineuse comprend une pluralité de diodes électroluminescentes selon une disposition annulaire dans le plan d'éclairage. Ce mode de réalisation permet d'obtenir un éclairage sans ombre et la disposition annulaire permet de centrer la buse par rapport à cet éclairage de sorte que l'image de l'orifice de projection sur la caméra de centrage soit uniformément éclairée, alors que le point de focalisation du faisceau laser reste suffisamment sombre pour pouvoir être visualisé.

Selon un mode de réalisation perfectionné, le système objet de l'invention comporte :
g. un troisième appareil de prise de vue, dont l'axe optique est parallèle au plan d'éclairage et perpendiculaire à celui de la caméra de profil.

Ce mode de réalisation permet de mesure la forme du jet de poudre et l'alignement de son profil avec le laser selon deux plans. Le réglage de la forme du jet de poudre est réalisé en jouant sur les débits poudre et gaz pas. Ainsi le système objet de l'invention permet une mesure et un réglage tridimensionnel de la géométrie de la projection / fusion.

L'invention concerne également un procédé pour le réglage et la mesure d'un dispositif de projection / fusion de matière, notamment par le procédé CLAD, au moyen d'un système selon l'invention, lequel procédé comprend les étapes consistant à :
i. positionner la buse de projection au-dessus du plan d'éclairage selon une orientation sensiblement normale audit plan ;
ii. placer la cible entre la sortie de la buse et le plan d'éclairage de sorte que ladite cible intercepte un tir laser ;
iii. effectuer un tir laser à faible énergie ;
iv. éclairer l'extrémité de la buse au moyen de la source lumineuse ;
v. obtenir l'image à travers l'extrémité de la buse par la caméra de centrage, de la marque laissée par le tir laser sur la cible, alors que l'extrémité de la buse est éclairée.

Ce procédé permet d'obtenir une image de la position de l'orifice de projection de poudre, lequel apparaît comme une couronne lumineuse, par rapport à l'axe du faisceau laser, matérialisé par la marque laissée par le laser sur la cible, sans retirer ladite cible, ainsi que de visualiser les modifications de cette position lors de chaque réglage, par le déplacement de la couronne lumineuse, facilitant ainsi le réglage de la buse.

Selon une variante du procédé objet de l'invention, la cible est collée sur l'extrémité de la buse.

Selon une autre variante du procédé objet de l'invention, la cible est maintenue sur le plan de d'éclairage.

La possibilité de vision à travers la buse conférée par la caméra de centrage et le cheminement optique du dispositif objet de l'invention, permet de mettre en oeuvre le procédé objet de l'invention avec la cible placée entre ces deux extrêmes, ou toute position entre celles-ci.

Avantageusement, le procédé objet de l'invention comprend les étapes consistant à :
vi. mesurer l'erreur de centrage entre le contour de l'image de l'espace éclairé et
   l'image de la marque laissée par le laser sur la cible, sur l'image obtenue à l'étape v) ;
vii. calculer le réglage pour corriger l'erreur de centrage.

Ces étapes, mises en oeuvre par les moyens d'acquisition et de traitement, permettent, en fonction du dispositif de réglage de la machine, de déterminer automatiquement les corrections à réaliser.

Avantageusement, le procédé objet de l'invention comprend les étapes consistant à :
viii. réaliser une projection de poudre ;
ix. obtenir l'image de la poudre projetée par la caméra de profil.

Ainsi, le procédé objet de l'invention permet de visualiser la forme du jet de poudre. Aussi, le procédé objet de l'invention comprend avantageusement les étapes consistant à :
x. déterminer la forme de l'image du jet de poudre à partir d'un profil prédéterminé sur l'image obtenue à l'étape ix) ;
xi. déduire de l'étape x) les jauges d'outil correspondant au jet.

Ainsi le procédé objet de l'invention permet d'obtenir des jauges d'outil précises pour améliorer la qualité de fabrication des objets.

Avantageusement, le procédé objet de l'invention comprend en outre les étapes consistant à :
xii. générer un faisceau laser pendant l'étape viii)
xiii. mesurer sur l'image obtenue à l'étape ix) l'écart d'orientation de l'image du jet de poudre par rapport à l'image du faisceau laser ;
xiv. déduire des résultats de l'étape xii) les réglages à réaliser pour corriger l'erreur d'orientation.

En plus du fait d'obtenir une orientation parfaite du jet de poudre par rapport au laser, les mesures réalisées à lors de l'étape xii) permettent de vérifier le bon fonctionnement du dispositif de fabrication additive, notamment après une collision.

Selon un mode de réalisation perfectionné, le procédé objet de l'invention met en oeuvre un système comportant trois appareils de prise de vue et comprend les étapes consistant à :
xv. obtenir une image de la poudre projetée au moyen du troisième appareil de prise de vue ;
xvi. reprendre les étapes xiii) et xiv) avec l'image obtenue à l'étape xv) à la place de l'image obtenue à l'étape ix).

Selon ce même mode de mise en oeuvre, le procédé objet de l'invention comprend une étape consistant à :
xvi. reprendre les étapes x) et xi) avec l'image obtenue à l'étape xiv) à la place de l'image obtenue à l'étape ix).

Ce mode de réalisation perfectionné du procédé objet de l'invention permet de réaliser un contrôle et un réglage tridimensionnel du jet de poudre et du faisceau laser. Ainsi, selon ce mode de réalisation, le procédé objet de l'invention comprend avantageusement une étape consistant à :
xvii. reprendre les étapes x) et xi) avec l'image obtenue à l'étape xv) à la place de l'image obtenue à l'étape ix).

L'invention est exposée ci-après selon ses modes de réalisation préférés, nullement limitatifs, et en référence aux figures 1 à 5, dans lesquelles :
- la figure 1, relative à l'art antérieur, montre selon une vue de principe en perspective et en coupe, un exemple de réalisation d'une buse de projection / fusion utilisée dans le procédé CLAD® ;
- la figure 2 montre selon une vue schématique de face et selon une coupe AA définie figure 3 un exemple d'installation du système objet de l'invention dans une machine de fabrication additive ;
- la figure 3 représente selon une vue de dessus un exemple de réalisation du système objet de l'invention ;
- la figure 4 illustre le réglage de la concentricité du faisceau laser et de la buse par l'image obtenue par la caméra de centrage ;
- et la figure 5 montre un exemple de l'écran affiché sur les moyens d'acquisition et de traitement pour la réalisation des réglages ou moyen des caméras de profil.

Figure 2, selon un exemple de réalisation, le système objet de l'invention est installé dans une machine-outil apte à réaliser une fabrication additive. À titre d'exemple ledit système est installé sur la table (201) de ladite machine, sur laquelle il est fixé par l'intermédiaire d'un support (210) magnétique. Selon des variantes de réalisation (non représentées), ledit support n'est pas magnétique et est bridé ou boulonné sur la table, ou encore fixé à demeure sur celle-ci en un emplacement ne gênant pas les opérations de fabrication. Ledit système comporte une source lumineuse (220). Ladite source (220) lumineuse émet un flux (221) lumineux majoritairement dirigé perpendiculairement à un plan d'éclairage, plan d'éclairage qui, selon cet exemple de réalisation, est sensiblement parallèle à la table (201) de la machine. Selon des modes de réalisation alternatifs, le support est un support en Vé, par exemple pour installer le système sur une surface cylindrique, ou comporte des moyens pour régler son orientation, et par suite l'orientation de la source lumineuse, par rapport à la surface sur laquelle il est placé.

Pour la mise en oeuvre du système objet de l'invention, la tête (202) de fabrication additive de la machine est positionnée au-dessus de la source (220) lumineuse, de telle sorte que la direction (203) du faisceau laser soit sensiblement perpendiculaire au plan d'éclairage, ledit faisceau laser étant, de préférence, centré par rapport à la source lumineuse de sorte à obtenir un éclairage uniforme de la buse (100).

Selon cet exemple de réalisation, un bras support (230), attaché au support (210) de la source lumineuse, permet de placer une caméra (240) vidéo, de préférence numérique, dite caméra de profil, de telle manière que l'axe (241) optique de la caméra soit sensiblement perpendiculaire à la direction (203) présumée du faisceau laser, donc sensiblement parallèle au plan d'éclairage, et que ladite caméra procure une image de l'extrémité de la buse (100) de projection et du jet de poudre sortant de ladite buse. Alternativement, la caméra de profil est fixée dans la machine indépendamment du support (210) de la source lumineuse, tout en respectant l'orientation de son axe optique par rapport à la direction présumée du faisceau laser.

Un cheminement optique (250) est réalisé dans la tête d'usinage additif, permettant à une deuxième (260) caméra, dite caméra de centrage, d'obtenir une image à travers l'orifice de projection de poudre de la buse (100). Sur nombre de machines mettant en oeuvre le procédé CLAD, ce cheminement (250) optique et l'emplacement pour l'installation de cette deuxième caméra sont pré-installés de sorte qu'aucune modification de la tête de fabrication additive n'est nécessaire. La représentation du cheminement optique figure 2 est une représentation de principe. En pratique, ledit cheminement est réalisé de sorte qu'il n'interfère pas avec le faisceau laser. Ainsi, la caméra (260) de centrage produit une image telle que vue à travers la buse (100). Le réglage de la caméra, notamment du point de netteté et de la profondeur de champs, du cheminement optique et de la position de la tête (202) d'usinage additif par rapport à la source (220) lumineuse est tel que la caméra de centrage puisse visualiser dans la même image, avec une netteté adaptée aux mesures réalisées, le périmètre de l'orifice de projection de poudre et une matérialisation de la position du faisceau laser. Cette matérialisation est obtenue par la perforation d'une cible placée entre l'extrémité de la buse (100) et le plan d'éclairage. La perforation de ladite cible est réalisée par un tir laser à puissance réduite.

Les deux caméras (240, 260) sont connectées à un système (290) d'acquisition et de traitement, par exemple un ordinateur portable, permettant de recueillir les images fournies par lesdites caméras et de réaliser divers traitements sur ces images.

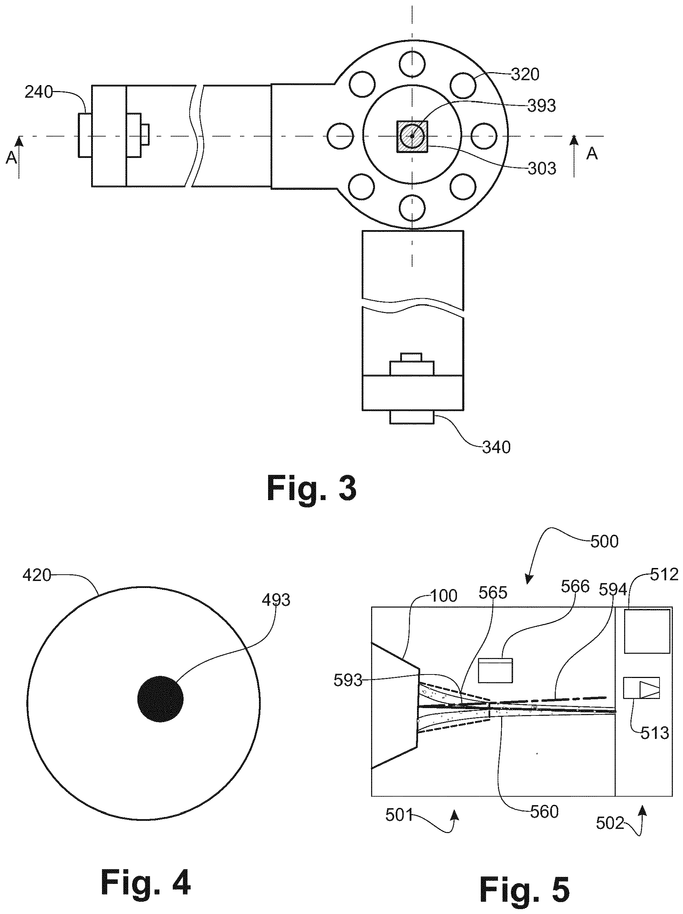

Figure 3, selon un exemple de réalisation, la source lumineuse comprend une pluralité de sources (320) lumineuses, par exemple des diodes électroluminescentes disposées sur le plan d'éclairage selon une configuration annulaire, la tête de fabrication additive étant placée sensiblement au centre de cet anneau. Une telle source lumineuse permet d'obtenir un éclairage sans ombre de la buse avec une zone centrale plus sombre permettant de mieux visualiser la cible (303) au centre du dispositif. Selon cet exemple de mise en oeuvre, la cible (303) est placée sur le plan d'éclairage. Ladite cible est par exemple constituée de papier ou de ruban adhésif permettant de réaliser une marque réalisée sur la cible par un tir laser à faible puissance, inférieure à 10 watts préférentiellement inférieure à 5 watts.

Ladite cible (303) est placée sur le trajet du faisceau laser entre le plan d'éclairage et la sortie de la buse de la tête de fabrication additive. Les positions les plus faciles de mise en oeuvre sont obtenues lorsque ladite cible est placée sur le plan d'éclairage ou sur l'extrémité de sortie de la buse. La cible est collée ou maintenue par une pince (non représentée). Le tir laser de faible puissance, produit sur la cible une zone de brûlure (393) plus sombre ou une perforation sensiblement circulaire.

Selon un mode de réalisation particulier, le dispositif objet de l'invention comprend une deuxième caméra (340) de profil, visant la buse de la tête de fabrication additive, dont l'axe optique est perpendiculaire à l'axe présumé du faisceau laser et sensiblement perpendiculaire à l'axe de la première caméra (240) de profil.

Figure 4, l'image observée par la caméra de centrage comporte une couronne lumineuse (420) dont le périmètre correspond à l'orifice d'expulsion de la poudre et une tâche sombre (493) correspondant à la marque laissée par le laser sur la cible. À partir des moyens d'acquisition et de traitement, les contours de ces deux taches, la tache lumineuse (420) et la tache sombre (493), sont par exemple assimilés à des cercles dont il est facile de mesurer l'excentration relative. Cette opération de mesure est réalisée par l'opérateur en visualisant sur l'écran des moyens d'acquisition et de traitement l'image délivrée par la caméra de centrage. L'identification des deux cercles est réalisée par l'opérateur, par exemple au moyen d'outil graphique permettant de superposer le tracé desdits contours sur l'image obtenue par la caméra de centrage. Afin de réaliser la mesure précisément, les moyens d'acquisition et de traitement reçoivent avantageusement de la caméra de centrage comme des autres caméras des informations telles que la focale de l'objectif utilisé, le réglage de la mise au point, le diaphragme et la résolution, sans que cette liste ne soit ni exhaustive ni limitative, ces informations permettant de calculer précisément le rapport de reproduction de l'image affichée et ainsi de réaliser les mesures appropriées.

Lorsque la cible est placée sur le plan d'éclairage, que le réglage est réalisé en agissant sur le centrage mécanique des cônes de la buse, et sous réserve de ne pas déplacer la tête de fabrication additive par rapport au dispositif objet de l'invention, toute modification du centrage de l'orifice d'expulsion de la poudre est immédiatement visible sans réaliser de nouveau tir laser, ce qui permet de régler la buse avec une image en temps réel. Lorsque le dispositif de fabrication additive comprend un réglage optique du laser, par exemple au moyen d'une lentille, alors le réglage initial est calculé au moyen de l'acquisition d'image. Une fois le réglage réalisé, un nouveau tir est effectué. Selon ce dernier mode de mise en oeuvre, la facilité de réalisation est identique que la cible soit placée sur l'extrémité de la buse ou sur le plan d'éclairage.

Figure 5, selon un exemple de mise en oeuvre l'écran (500) d'affichage sur les moyens d'acquisition et de traitement correspondant à l'une ou l'autre des caméras de profil, comprend un premier cadre (501) représentant l'image vue par la caméra de profil. Cette image montre l'extrémité de la buse (100) de la tête de fabrication additive, et lorsqu'un jet de poudre est propulsé par cette buse, la caméra de profil permet de visualiser l'image (560) de ce jet de poudre. Si un faisceau laser est généré pendant le jet de poudre, l'éclairement des particules pulvérulentes permet une visualisation de la direction (593) dudit faisceau laser. Selon des variantes de réalisation, l'image de la buse et de la projection de poudre dans ce premier écran est une image animée montrant en temps réel la projection de poudre et la forme du jet en fonction du réglage des débits de poudre et de gaz, ou une image photographique tirée d'un essai de projection de poudre réalisé précédemment.

Le système objet de l'invention comprend avantageusement des moyens de mémoire pour enregistrer et éventuellement horodater les images ou les films acquis par les diverses caméras ainsi que les réglages réalisés.

Un deuxième cadre (502) de l'écran permet à l'opérateur d'accéder à un jeu d'outils comprenant, par exemple, des outils graphiques pour la réalisation de tracés sur l'image représentée dans le premier écran (501). A l'aide de ces outils, l'opérateur, selon un exemple de réalisation, détermine le profil de l'image (560) du jet de poudre, selon un motif (565) prédéterminé, par exemple un trapèze. Selon cet exemple de réalisation, une étiquette (566) affichée dans le premier cadre (501) donne à l'opérateur un premier niveau d'information sur les caractéristiques du trapèze (565) ainsi identifié. Un affichage (513) dans le deuxième cadre, renseigne l'opérateur sur les jauges d'outil déduites du profil (565) identifié. Ces jauges d'outils sont alors rentrées en saisie manuelle par l'opérateur, dans les tables de correction de la machine, ou, plus avantageusement, les moyens d'acquisition et de traitement comprennent une interface d'échange de données avec le directeur de commande de la machine et les tables de correction de la machine sont immédiatement mises à jour par transfert des valeurs numériques identifiées une fois que l'opérateur a validé la mesure. Ces jauges consistent par exemple à la longueur du trapèze, la largeur de sa grande base, assimilable à au grand diamètre du jet de poudre et la largeur de son sommet tronqué, assimilable au petit diamètre du jet tronconique.

L'image dans le premier cadre (501) permet également de détecter le cas d'un faisceau laser (594) qui serait mal orienté par rapport au jet de poudre, et si besoin de calculer les réglages nécessaires pour rétablir cette orientation.

Lorsque le système objet de l'invention comprend deux caméras de profils ces différents réglages et contrôles sont réalisés à partir des images fournies par chacune desdites caméras de profil.

La description ci-avant et les exemples de réalisation, montrent que l'invention atteint le but visé, à savoir elle permet de faciliter grandement les différents réglages de positionnement du laser par rapport à la buse. L'invention est ici présentée dans le cadre d'une machine de fabrication additive, mais elle est également adaptable au réglage de la concentricité et de l'orientation d'une buse de découpe laser par rapport audit laser de découpe. Les images ainsi que les réglages sont avantageusement archivés dans des moyens de mémoire afin d'assurer la traçabilité des fabrications réalisées.

## Revendications

1. Système pour le réglage et la mesure d'un dispositif (201) de fabrication additive, notamment par le procédé CLAD, comprenant une buse (100) de projection de poudre et un faisceau laser traversant le centre de ladite buse, **caractérisé en ce qu'**il comporte :
a. une source lumineuse comprenant :
ai. un moyen (210) de positionnement de ladite source lumineuse par rapport à une surface matérielle ;
aii. un moyen (220) d'éclairage, apte à délivrer un flux (221) lumineux sensiblement perpendiculaire à un plan, dit plan d'éclairage ;
b. un appareil (240, 340) de prise de vue, dit caméra de profil, installé de sorte que son axe (241) optique soit sensiblement parallèle au plan d'éclairage ;
c. un dispositif (250) de cheminement optique apte à projeter la vision par le centre de la buse (100) ;
d. un deuxième appareil (260) de prise de vue, dit caméra de centrage, dont l'axe optique est placé sur le cheminement optique (250) ;
e. une cible (303) apte à être marquée par un tir laser à faible puissance ;
f. un ensemble (290) d'acquisition et de traitement apte à collecter les images issues des appareils (240, 260, 340) de prise de vue.

2. Système selon la revendication 1, dans lequel la source lumineuse comprend une pluralité de diodes (320) électroluminescentes selon une disposition annulaire dans le plan d'éclairage.

3. Système selon la revendication 1, comprenant :
g. un troisième appareil (340) de prise de vue, dont l'axe optique est parallèle au plan d'éclairage et perpendiculaire à celui de la première (240) caméra de profil.

4. Procédé pour le réglage et la mesure d'un dispositif de projection / fusion de matière, notamment par le procédé CLAD, au moyen d'un système selon la revendication 1, **caractérisé en ce qu'**il comprend les étapes consistant à :
i. positionner la buse (100) de projection au-dessus du plan d'éclairage selon une orientation sensiblement normale audit plan ;
ii. placer la cible (303) entre la sortie de la buse et le plan d'éclairage de sorte que ladite cible intercepte un tir laser ;
iii. effectuer un tir laser à faible énergie ;
iv. éclairer l'extrémité de la buse au moyen de la source lumineuse ;
v. obtenir l'image (493) à travers l'extrémité de la buse par la caméra de centrage, de la marque (393) laissée par le tir laser sur la cible, alors que l'extrémité de la buse est éclairée.

5. Procédé selon la revendication 4, dans lequel la cible est collée sur l'extrémité de la buse.

6. Procédé selon la revendication 4, dans lequel la cible (303) est maintenue sur le plan de d'éclairage.

7. Procédé selon la revendication 4, comprenant les étapes consistant à :
vi. mesurer l'erreur de centrage entre le contour de l'image (420) de l'espace éclairé et l'image (493) de la marque (393) laissée par le laser sur la cible, sur l'image obtenue à l'étape v) ;
vii. calculer le réglage pour corriger l'erreur de centrage.

8. Procédé selon la revendication 4, comprenant les étapes consistant à :
viii. réaliser une projection de poudre ;
ix. obtenir l'image (560) de la poudre projetée par la caméra (240, 340) de profil.

9. Procédé selon la revendication 8, comprenant les étapes consistant à :
x. déterminer la forme (565) du jet de poudre à partir d'un profil prédéterminé sur l'image obtenue à l'étape ix) ;
xi. déduire de l'étape x) les jauges d'outil correspondant au jet.

10. Procédé selon la revendication 8, comprenant les étapes consistant à :
xii. générer un faisceau laser pendant l'étape viii)
xiii. mesurer sur l'image obtenue à l'étape ix) l'écart d'orientation de l'image (560) du jet de poudre par rapport à l'image (593) du laser ;
xiv. déduire des résultats de l'étape xii) les réglages à réaliser pour corriger l'erreur d'orientation du faisceau laser par rapport du jet de poudre.

11. Procédé selon la revendication 10, mettant en oeuvre un système selon la revendication 3 et comportant les étapes consistant à :
xv. obtenir une image (560) de la poudre projetée au moyen du troisième appareil (340) de prise de vue ;
xvi. reprendre les étapes xiii) et xiv) avec l'image obtenue à l'étape xv) à la place de l'image obtenue à l'étape ix).

12. Procédé selon la revendication 11, comprenant les étapes consistant à :
xvii. reprendre les étapes x) et xi) avec l'image obtenue à l'étape xv) à la place de l'image obtenue à l'étape ix).

## Patentansprüche

1. System zum Justieren und zum Messen einer Vorrichtung (201) zur additiven Fertigung, insbesondere nach dem CLAD-Verfahren, die eine Pulversprühdüse (100) und einen Laserstrahl umfasst, welcher durch den Mittelpunkt der Düse hindurchgeht, **dadurch gekennzeichnet, dass** es umfasst:
a. eine Lichtquelle, umfassend:
ai. ein Mittel (210) zum Positionieren der Lichtquelle in Bezug auf eine materielle Oberfläche;
aii. ein Beleuchtungsmittel (220), das in der Lage ist, einen Lichtstrom (221) zu liefern, der im Wesentlichen zu einer als Beleuchtungsebene bezeichneten Ebene parallel ist;
b. ein als Profilkamera bezeichnetes Bildaufnahmegerät (240, 340), das so installiert ist, dass seine optische Achse (241) im Wesentlichen zur Beleuchtungsebene parallel ist;
c. eine optische Pfadvorrichtung (250), die in der Lage ist, den Blick durch den Mittelpunkt der Düse (100) zu projizieren;
d. ein als Zentrierkamera bezeichnetes zweites Bildaufnahmegerät (260), dessen optische Achse im optischen Pfad (250) platziert ist;
e. ein Ziel (303), das in der Lage ist, mit einem Laserschuss von geringer Leistung markiert zu werden;
f. eine Aufzeichnungs- und Verarbeitungseinheit (290), die in der Lage ist, die von den Bildaufnahmegeräten (240, 260, 340) ausgegebenen Bilder zu sammeln.

2. System nach Anspruch 1, wobei die Lichtquelle eine Vielzahl von lichtemittierenden Dioden (320) in einer ringförmigen Anordnung in der Beleuchtungsebene umfasst.

3. System nach Anspruch 1, umfassend:
g. ein drittes Bildaufnahmegerät (340), dessen optische Achse zur Beleuchtungsebene parallel und zu derjenigen der ersten (240) Profilkamera senkrecht ist.

4. Verfahren zum Justieren und zum Messen einer Vorrichtung zum Aufsprühen/Schmelzen von Material, insbesondere nach dem CLAD-Verfahren, mittels eines Systems nach Anspruch 1, **dadurch gekennzeichnet, dass** es die Schritte umfasst, die darin bestehen:
i. die Sprühdüse (100) oberhalb der Beleuchtungsebene in einer Ausrichtung zu positionieren, die im Wesentlichen zur Ebene normal ist;
ii. das Ziel (303) so zwischen dem Auslass der Düse und der Beleuchtungsebene zu platzieren, dass das Ziel einen Laserschuss abfängt;
iii. einen Laserschuss von geringer Energie abzugeben;
iv. das Ende der Düse mittels der Lichtquelle zu beleuchten;
v. mit der Zentrierkamera durch das Ende der Düse hindurch das Bild (493) der vom Laserschuss auf dem Ziel hinterlassenen Markierung (393) zu erfassen, während das Ende der Düse beleuchtet wird.

5. Verfahren nach Anspruch 4, wobei das Ziel auf das Ende der Düse geklebt wird.

6. Verfahren nach Anspruch 4, wobei das Ziel (303) auf der Beleuchtungsebene gehalten wird.

7. Verfahren nach Anspruch 4, umfassend die Schritte, die darin bestehen:
vi. in dem im Schritt v) erfassten Bild den Zentrierfehler zwischen der Kontur des Bildes (420) des beleuchteten Raums und dem Bild (493) der vom Laser auf dem Ziel hinterlassenen Markierung (393) zu messen;
vii. die Justierung zu berechnen, um den Zentrierfehler zu korrigieren.

8. Verfahren nach Anspruch 4, umfassend die Schritte, die darin bestehen:
viii. ein Aufsprühen von Pulver auszuführen;
ix. mit der Profilkamera (240, 340) das Bild (560) des aufgesprühten Pulvers zu erfassen.

9. Verfahren nach Anspruch 8, umfassend die Schritte, die darin bestehen:
x. in dem im Schritt ix) erfassten Bild die Form (565) des Pulverstrahls auf Grundlage eines vorbestimmten Profils zu bestimmen;
xi. aus dem Schritt x) die Werkzeuglehren abzuleiten, die dem Strahl entsprechen.

10. Verfahren nach Anspruch 8, umfassend die Schritte, die darin bestehen:
xii. während des Schritts viii) einen Laserstrahl zu erzeugen,
xiii. in dem im Schritt ix) erfassten Bild die Ausrichtungsdifferenz des Bildes (560) des Pulverstrahls in Bezug auf das Bild (593) des Lasers zu messen;
xiv. aus den Ergebnissen des Schritts xii) die Justierungen abzuleiten, die auszuführen sind, um den Ausrichtungsfehler des Laserstrahls in Bezug auf den Pulverstrahl zu korrigieren.

11. Verfahren nach Anspruch 10, das ein System nach Anspruch 3 einsetzt und die Schritte umfasst, die darin bestehen:
xv. mittels des dritten Bildaufnahmegeräts (340) ein Bild (560) des aufgesprühten Pulvers zu erfassen;
xvi. die Schritte xiii) und xiv) mit dem im Schritt xv) erfassten Bild anstelle des im Schritt ix) erfassten Bildes zu wiederholen.

12. Verfahren nach Anspruch 11, umfassend die Schritte, die darin bestehen:
xvii. die Schritte x) und xi) mit dem im Schritt xv) erfassten Bild anstelle des im Schritt ix) erfassten Bildes zu wiederholen.

## Claims

1. System for adjusting and measuring a device (201) for additive manufacturing, in particular by means of the CLAD process, comprising a powder spray nozzle (100) and
a. a light source comprising:
ai. a means (210) for positioning said light source relative to a material surface;
aii. a lighting means (220), capable of delivering a luminous flux (221) substantially perpendicular to a plane, referred to as the lighting plane;
b. an imaging device (240, 340) referred to as the profile camera, installed such that the optical axis (241) of same is substantially parallel to the lighting plane
c. an optical path device (250) capable of projecting the view through the center of the nozzle (100);
d. a second imaging device (260), referred to as the centering camera, the optical axis of which is positioned on the optical path (250);
e. a target (303) capable of being marked by a low-power laser shot;
f. an acquisition and processing assembly (290) capable of collecting the images from the imaging devices (240, 260, 340).

2. System according to claim 1, wherein the light source comprises a plurality of light-emitting diodes (320) according to an annular arrangement in the lighting plane.

3. System according to claim 1, comprising:
g. a third imaging device (340), the optical axis of which is parallel to the lighting plane and perpendicular to that of the first (240) profile camera.

4. Method for adjusting and measuring a device for spraying / melting material, in particular by means of the CLAD process, using a system according to claim 1, **characterized in that** it comprises the steps consisting in:
i. positioning the spray nozzle (100) above the lighting plane according to an orientation substantially normal to said plane;
ii. placing the target (303) between the output of the nozzle and the lighting plane in such a way that said target intercepts a laser shot;
iii. carrying out a low-power laser shot;
iv. lighting the end of the nozzle by means of the light source;
v. obtaining the image (493) through the end of the nozzle by the centering camera, of the mark (393) left by the laser shot on the target, while the end of the nozzle is illuminated.

5. Method according to claim 4, wherein the target is glued onto the end of the nozzle.

6. Method according to claim 4, wherein the target (303) is maintained on the lighting plane.

7. Method according to claim 4, comprising the steps consisting in:
vi. measuring the centering error between the contour of the image (420) of the illuminated space and the image (493) of the mark (393) left by the laser on the target, on the image obtained in the step v);
vii. calculating the adjustment so as to correct the centering error.

8. Method according to claim 4, comprising the steps consisting in:
viii. carrying out a spraying of powder;
ix. obtaining the image (560) of the powder sprayed by the profile camera (240, 340).

9. Method according to claim 8, comprising the steps of:
x. determining the shape (565) of the stream of powder from a predetermined profile on the image obtained in the step ix);
xi. deducing from the step x) the tool settings corresponding to the stream.

10. Method according to claim 8, comprising the steps of:
xii. generating a laser beam during the step viii)
xiii. measuring on the image obtained in the step ix) the difference in orientation of the image (560) of the stream of powder in relation to the image (593) of the laser;
xiv. deducing the results of the step xii) the adjustments to be made in order to correct the orientation error of the laser beam in relation to the stream of powder.

11. Method according to claim 10, implementing a system according to claim 3 and comprising the steps consisting in:
xv. obtaining an image (560) of the powder sprayed using the third imaging device (340);
xvi. repeating the steps xiii) and xiv) with the image obtained in the step xv) in place of the image obtained in the step ix).

12. Method according to claim 11, comprising the steps consisting in:
xvii. repeating the steps x) and xi) with the image obtained in the step xv) in place of the image obtained in the step ix).
